# EUROPEAN PATENT APPLICATION

(11) **EP 4 276 772 A1**
(43) Date of publication of application: **15.11.2023**
(21) Application number: 22173109.4
(22) Date of filing: 12.05.2022
(51) Int. Cl.: G06V 20/52, G06V 40/20

(54) **METHOD, COMPUTER PROGRAM AND SYSTEM FOR ANALYSING ONE OR MORE MOVING OBJECTS IN A VIDEO**

(71) Applicant: Fraunhofer-Gesellschaft zur Förderung der angewandten Forschung e.V., 80686 München (DE); Boehringer Ingelheim GmbH, 55216 Ingelheim am Rhein (DE)
(72) Inventor: BISGIN, Pinar, 44227 Dortmund (DE); WERGER, Ole, 44227 Dortmund (DE); BAIER, Raphael, 44227 Dortmund (DE); MATALLO, José, 55216 Ingelheim am Rhein (DE)
(74) Representative: Schairer, Oliver Michael

(57) **Abstract**

A method, being executed by a computer or signal processor or system or apparatus, for processing a first video data set comprising first video data of a first video depicting a plurality of moving objects. The method comprises generating (110) one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set. Moreover, the method comprises analysing (120) each further video data set of the one or more further video data sets to obtain information on the moving object being associated with said further video data set, and outputting (130) the information on said moving object.

## Description

The present invention relates to a method, a computer program and a system for analysing one or more moving objects in a video.

Surveillance of certain characteristics of moving objects is important. To this purpose, usually, a video that depicts a plurality of moving objects that shall be monitored is presented to human observers that monitor the characteristic behavior or movements of the moving objects over time by watching and analysing the video.

Moving objects that may, e.g., be monitored may, e.g., be living beings, for example, animals, such as mammals, e.g., dogs or cats, and the human observers, for example, count how often an individual one of the animals exhibits a particular behavior.

Other moving objects may, e.g., be non-living moving objects, such as a plurality of robots, and the human observers may, e.g., count how often each of the robots exhibits an undesired behavior.

Monitoring a plurality of moving objects based on human observers is very time-consuming for the observers, and is sometimes subjective and erroneous.

On the other hand, tracking of objects is well-known in the art, and video object extraction techniques have been presented in the past.

Wei Zeng, Wen Gao, Debin Zhao, Automatic Moving Object Extraction in MPEG Video, IEEE International Symposium on Circuits and Systems (ISCAS), 2003 present a moving object extraction technique for MPEG coded data based on a change-based motion object extraction approach, which discriminates background and moving objects by means of the higher-order statistics performed on inter-frame differences. In the frames/images of the video, the background is detected by a moment-preserving threshold technique for each frame. Based on a background statistic, a proportion of background variance is used to extract a final object mask.

It would be appreciated, if improved concepts for analysing one or more moving objects in a video would be provided.

The object of the present invention is therefore to provide improved concepts for analysing one or more moving objects in a video. The object of the present invention is solved by a method according to claim 1, by a computer program according to claim 14 and by a system according to claim 15.

A method, being executed by a computer or signal processor or system or apparatus, for processing a first video data set comprising first video data of a first video depicting a plurality of moving objects, for example a plurality of living beings, such as a plurality of animals, in particular, a plurality of mammals, or for example a plurality of non-living moving objects according to an embodiment is provided. The method comprises:
- Generating one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set. And:
- Analysing each further video data set of the one or more further video data sets to obtain information on the moving object being associated with said further video data set, and outputting the information on said moving object.

Moreover, a computer program for implementing the above-described method when being executed on the computer or on the signal processor is provided.

Furthermore, a system for processing a first video data set comprising first video data of a first video depicting a plurality of moving objects, for example a plurality of living beings, such as a plurality of animals, in particular, a plurality of mammals, or for example a plurality of non-living moving objects, according to an embodiment is provided. The system is configured for generating one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set. Moreover, the system is configured for analysing each further video data set of the one or more further video data sets to obtain information on the moving object being associated with said further video data set. Furthermore, the system is configured for outputting the information on said moving object.

In the following, embodiments of the present invention are described in more detail with reference to the figures, in which:
- Fig. 1: illustrates a flow chart which shows a method, being executed by a computer or signal processor or system or apparatus, for processing a first video data set comprising first video data of a first video depicting a plurality of moving objects according to an embodiment.
- Fig. 2: illustrates a system for processing a first video data set comprising first video data of a first video depicting a plurality of moving objects according to an embodiment.
- Fig. 3: illustrates a particular application of embodiments of the present invention, wherein the behaviour of dogs may, e.g., be analysed.
- Fig. 4: illustrates a particular application of embodiments of the present invention, wherein the behaviour of participants of a road traffic situation is analysed.
- Fig. 5: illustrates a particular application of embodiments of the present invention, wherein a camera is directed towards the sky to record a video depicting flying objects in the sky.

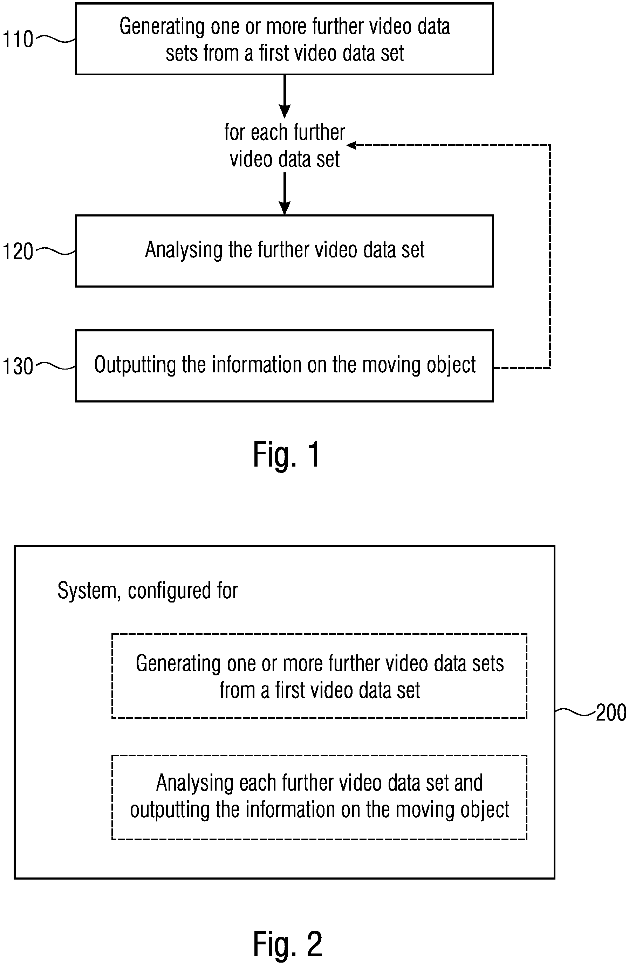

Fig. 1 illustrates a flow chart which shows a method, being executed by a computer or signal processor or system or apparatus, for processing a first video data set comprising first video data of a first video depicting a plurality of moving objects, for example a plurality of living beings, such as a plurality of animals, in particular, a plurality of mammals, or for example a plurality of non-living moving objects.

According to step 110, the method comprises generating one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set, and

Moreover, in accordance with step 120, the method comprises analysing each further video data set of the one or more further video data sets to obtain information on the moving object being associated with said further video data set.

Furthermore, according to step 130, the method comprises outputting the information on said moving object.

The embodiment of Fig. 1 realizes to automatically monitor one or more moving objects and provides to automatically analyse the one or more monitored moving objects in the individual further video data set of the one or more moving objects. The efficiency of the analysis of the individual moving objects is increased by removing irrelevant information within the first video data set, when the further video data set is generated.

As irrelevant information is removed in the further video compared to the (e.g., original) first video, the moving object in the further video can be better analysed compared to an analysis of said moving object in the first video.

According to an embodiment, at least two further video data sets may, e.g., be generated (step 110) as the one or more further video data sets. Each moving object of at least two moving objects of the plurality of moving objects may, e.g., be associated with exactly one of the at least two video data sets. The method may, e.g., comprise analysing (step 120) each further video data set of the at least two further video data sets to obtain information on the moving object being associated with said further video data set. Moreover, the method may, e.g., comprise outputting (step 130) the information on each moving object of the at least two moving objects.

In an embodiment, a number of further video data sets are generated (step 110) as the at least two further video data sets that corresponds to a number of the plurality of moving objects being depicted in the first video.

According to an embodiment, generating (step 110) each further video data set of the one or more further video data sets may, e.g., be conducted such that the further video of said further video data set only depicts that moving object out of the plurality of moving objects that is associated with said further video data set.

As only that moving object that is associated with said further video data set remains in the further video, the moving object in the further video can be better analysed compared to an analysis of said moving object in the (e.g., original) first video.

In an embodiment, the first video data set may, e.g., comprise a plurality of first image data sets (e.g., a plurality of first frames), wherein each of the plurality of first image data sets comprises image data for one video image of the first video. Generating (step 110) each further video data set of the one or more further video data sets may, e.g., be conducted such that said further video data set comprises a plurality of further image data sets (e.g., a plurality of further frames), wherein each of the plurality of further image data sets comprises image data for one video image of the further video of said further video data set. Analysing (step 120) each further video data set of the one or more further video data sets is conducted by analysing the moving object being associated with said further video data set in each of one or more of the plurality of further image data sets of said further video data set.

According to an embodiment, generating (step 110) each further video data set of the one or more further video data sets may, e.g., be conducted using the first video data set by tracking the moving object being associated with said further video data set in the first video, and by generating said further video data set using the first video data set depending on the tracking of said moving object in the first video.

For example, by tracking the moving object being associated with said further video data set in the first video may, for example, be conducted by tracking said moving object, frame by frame, for each of two or more frames of the first video data set which comprise image data for two or more video images of the plurality of video images of the first video. In other words, each frame of said two or more frames of the first video data set comprises image data for one video image of the plurality of video images of the first video.

For example, the tracking of said moving object in the first video may, e.g., be conducted using a tracking algorithm, for example a centroid-based object tracking algorithm.

Generating (step 110) each further video data set of the one or more further video data sets may, for example, be conducted such that said moving object is located in a centred position of the plurality of video images of the further video of said further video data set, such that a centre of gravity of said moving object in each video image of the plurality of video images of the further video of the further video data set is located closer to a middle position of said video image than to any of four corner points of said video image, for example wherein the middle position is defined by a centre of gravity of said video image.

In an embodiment, analysing (step 120) each further video data set of the one or more further video data sets may, e.g., comprise determining whether or not a depiction of the moving object associated with said further video data set in one or more of the plurality of video images of the plurality of further frames of said further video data set corresponds to an image pattern.

Or, according to a further embodiment, analysing each further video data set of the one or more further video data sets may, e.g., comprise determining a probability on whether the depiction of the moving object associated with said further video data set in one or more of the plurality of video images of said further video data set corresponds to the image pattern.

Such an embodiment focuses on recognizing image pattern within individual images of the respective second video and thus allows to used well-established efficient pattern recognition technologies for the analysis. The efficiency of these pattern recognition techniques is increased by removing image information of the first video in the respective second video that is not needed for the analysis of the moving object being associated with the respective second video data stream.

According to an embodiment, analysing (step 120) each further video data set of the one or more further video data sets may, e.g., comprise determining whether or not the moving object being associated with said further video data set exhibits a particular characteristic or a particular movement.

Or, according to another embodiment, analysing each further video data set of the one or more further video data sets may, e.g., comprise determining a probability on whether the moving object being associated with said further video data set exhibits the particular characteristic or the particular movement.

In an embodiment, analysing (step 120) each further video data set of the one or more further video data sets may, e.g., comprise determining whether or not a depiction of the moving object associated with said further video data set in two or more video images of the plurality of video images of said further video data set corresponds to said image pattern. If a number of the two or more video images in which the depiction of said moving object corresponds to the image pattern is greater than a threshold value, it may, e.g., be determined that said moving object exhibits the particular characteristic. If the number of the two or more video images in which the depiction of said moving object corresponds to the image pattern is smaller than or equal to the threshold value, it may, e.g., be determined that said moving object does not exhibit the particular characteristic.

According to an embodiment, analysing (step 120) each further video data set of the one or more further video data sets may, e.g., comprise determining, whether or not the moving object being associated with said further video data stream exhibits the same characteristic or the same movement in each of at least two of the further video data sets.

In such embodiments, efficiency is increased even further as a same, single algorithm may, e.g., be employed to analyse the two or more videos for the two or more moving objects to be monitored.

According to an embodiment, the particular characteristic may, e.g., be one of two or more particular characteristics, or the particular movement may, e.g., be one of two or more particular movements. Analysing (step 120) each further video data set of the one or more further video data sets may, e.g., comprise determining, for each further video data set of the one or more further video data sets, and for each of the two or more particular characteristics or for each of the two or more particular movements, whether or not the moving object being associated with said further video data set exhibits said particular characteristic or said particular movement.

Or, analysing each further video data set of the one or more further video data sets may, e.g., comprise determining a probability for each further video data set of the one or more further video data sets, and for each of the two or more particular characteristics or for each of the two or more particular movements, on whether a moving object being associated with said further video data set exhibits said particular characteristic or said particular movement.

In an embodiment, analysing (step 120) each further video data set of the one or more further video data sets may, e.g., comprise determining a point-in-time in the further video of said further video data set and/or in the first video when the moving object being associated with said further video data set exhibits a particular characteristic or a particular movement.

Or, in an embodiment, analysing each further video data set of the one or more further video data sets may, e.g., comprise determining a point-in-time in the further video of said further video data set and/or in the first video when the probability on whether the moving object being associated with said further video data set exhibits the particular characteristic or the particular movement is greater than a threshold probability.

For example, a behaviour of a plurality of dogs may, e.g., be monitored, for example, to detect an itching behaviour of the dogs. The plurality of dogs may, e.g., thus be the plurality of moving objects. An individual (further) video may, e.g., be generated for each dog, each further video that depicting the respective dog. When an itching behaviours of the dog in the further video is detected, the point-in-time of the itching behaviour is stored and/or is output. For example, after analysis the further video with one of the dogs, it may, e.g., be output that the dog in the further video exhibited the itching behaviour at the points-in-time 5:30 min., 8:02 min. and 8:16 min.

According to an embodiment, the method may, e.g., comprise receiving from a user via a user interface the information on the moving object for a further video data set of the one or more further video data sets. Moreover, the method may, e.g., comprise machine-training an artificial intelligence algorithm, for example a neural network, using said further video data set and the information on the moving object as training data.

For example, the information on the moving object may, e.g., indicate whether or not the moving object being associated with said further video data set exhibits the particular characteristic or the particular movement. Or, the information may, e.g., indicate the probability on whether the moving object being associated with further video data set exhibits the particular characteristic or the particular movement.

Fig. 2 illustrates a system for processing a first video data set comprising first video data of a first video depicting a plurality of moving objects, for example a plurality of living beings, such as a plurality of mammals, or for example a plurality of non-living moving objects, according to an embodiment.

The system 200 is configured for generating one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set.

Moreover, the system 200 is configured for analysing each further video data set of the one or more further video data sets to obtain information on the moving object being associated with said further video data set.

Furthermore, the system 200 is configured for outputting the information on said moving object.

For example, in an embodiment, the system 200 may, e.g., be configured to implement one of the above-described methods.

In an embodiment, the system 200 may, e.g., comprise a processor for implementing one of the above described methods.

Moreover, according to an embodiment, the system 200 may, e.g., comprise a memory having stored thereon a computer program for implementing one of the above-described methods, when the computer program is executed on the processor.

According to an embodiment, the system 200 may, e.g., comprise a display for outputting the first video or for outputting at least one of the one or more further videos.

In an embodiment, the system 200 may, e.g., comprise a user interface for receiving the information on the moving object for a further video data stet of the one or more further video data sets described above.

According to an embodiment, the system 200 may, e.g., comprise a camera for recording the first video to obtain the first video data stream.

In a particular application of embodiments of the present invention, several dogs are automatically monitored with respect to their individual itching behaviour.

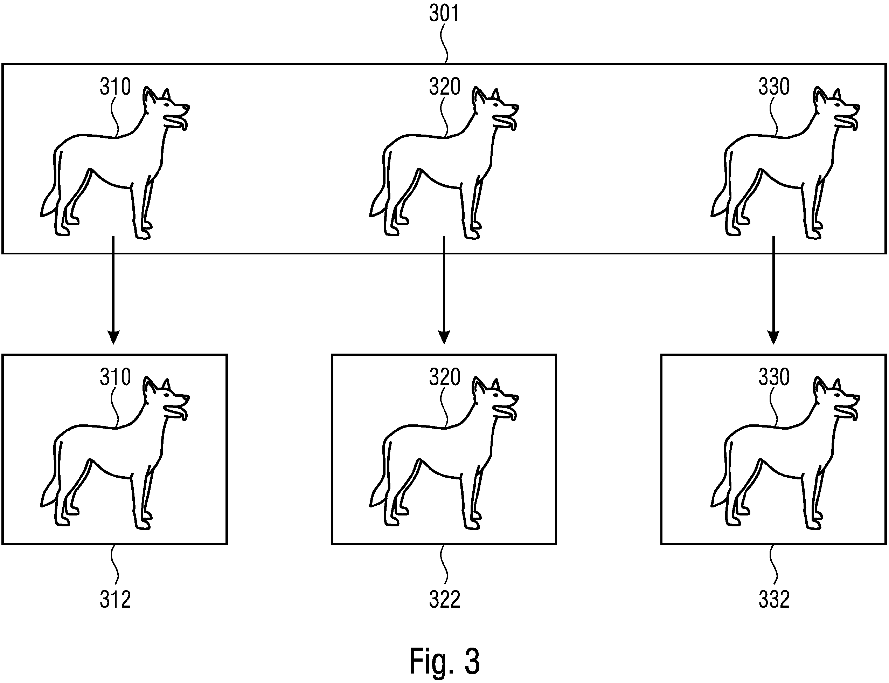

Fig. 3 illustrates such a particular application of embodiments of the present invention, wherein the behaviour of dogs 310, 320, 330 may, e.g., be analysed. Three further video data sets each comprising further video data of a further video 312, 322, 332 are automatically generated from a first video data set comprising video data of a first video 301. It is apparent that instead of monitoring three dogs, any other number of dogs may, e.g., be monitored.

To explain the background of such an application scenario, it is understood that a characteristic of atopic dermatitis of dogs is the occurrence of itching, what leads to clawing, licking and biting. To find out information on the effectiveness of a medicament for improving itching, at first, dogs are given a first medicament causing the dogs to claw, lick and bite. Afterwards, the dogs are given the medicament under test that shall reduce the clawing, licking and biting. Monitoring the further itching behaviour of the dogs allows to derive information on the effectiveness of the medicament.

For this purpose, the moving objects (e.g., any kind of living beings, for example, mammals, in this use case: the dogs, or, e.g., any kind of non-living moving objects) are filmed using a camera, for example, filmed from a bird's view. The dogs shall be monitored or tracked consistently in the video to assign a detected itching behaviour correctly from the beginning to an end of the video.

While in the past, such a video has been presented to persons, that have manually counted the number of itching movements, according to a particular embodiment, a system and a method for automatically detecting, identifying and tracking dogs in a video is provided.

According to an embodiment, a multi-step algorithm is provided that provides fine-granular information for each monitored dog on how often and when a dog has been biting, clawing and licking. For this purpose, a tracking algorithm is provided which can distinguish similar-looking dogs from each other in the (for example, bird's view) video.

For each picture of a (first) video, centre points of the monitored dogs may, e.g., be calculated, and the position of each dog may, e.g., be determined used the smallest distance to the centre point of the previous image of the video (centroid-based object tracking).

Based on the dog tracking, in a subsequent step, for each dog, a separate picture is generated on which the other dogs are no longer visible and the resulting separate pictures for a dog form a video for said particular dog. Thus, a separate (second) video is generated for each dog.

Subsequently, these videos are used for analysing the itching behaviour of the dogs. The detection of the itching behaviour in each video for each dog may, e.g., be conducted in parallel.

For example, for sequences of the particular videos of each dog, a probability may, e.g., be computed for each kind of itching. Training data for such a classifying algorithm may, e.g., likewise be generated based on the separate particular videos.

The provided algorithm may, e.g., employed together with a user interface. For example, the user interface may, e.g., allow the user to assign a name and/or an identified to each of the dogs, wherein the name and/or the identifier may, e.g., be further used by the tracking algorithm. When executing the algorithm, the software may, e.g., evaluate the behaviour of several dogs, for example, in parallel, or, for example, concurrently. Optionally, it may, e.g., be possible to manually evaluate the behaviour of the dogs, e.g., besides the automatic evaluation by the algorithm.

For example, afterwards, both the manual and the automatic evaluation may, e.g., be compared with each other.

In another particular application of embodiments of the present invention, participants of a road traffic situation in a city are automatically monitored with respect to their movements.

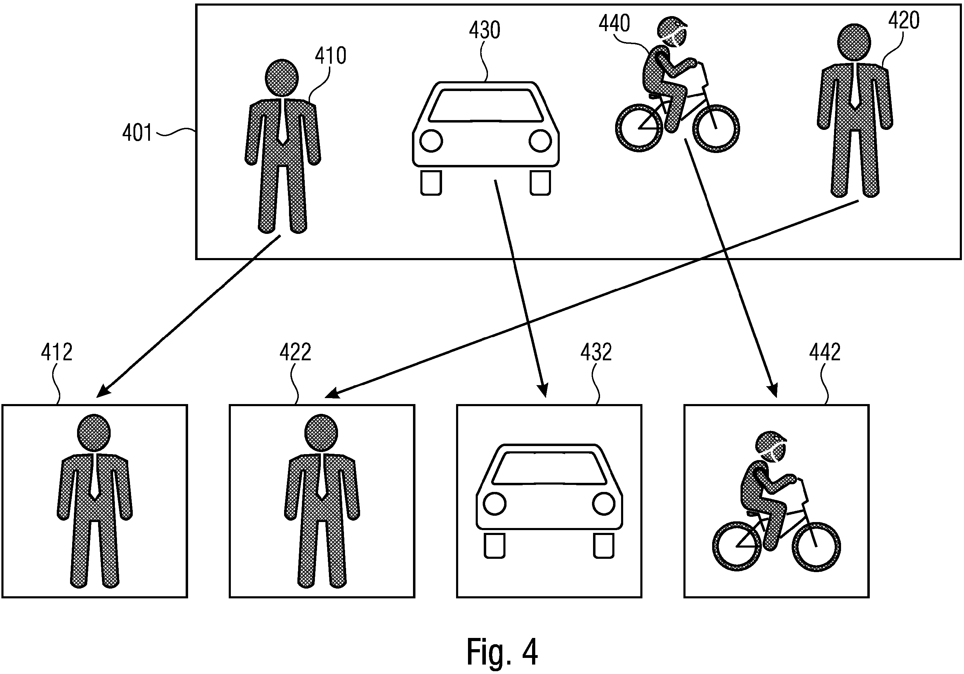

Fig. 4 illustrates such a particular application of embodiments of the present invention, wherein the behaviour of participants 410, 420, 430, 440 of a road traffic situation may, e.g., be analysed. For this purpose, a camera is installed to record a first video 401 that depict the traffic situation at a critical location. Four further video data sets each comprising further video data of a further video 412, 422, 432, 442 are automatically generated from a first video data set comprising video data of a first video 401, to better monitor the first pedestrian 410, the second pedestrian 420, the car 430 and the bicycle 440 depicted in the first video 401. Each of the (further) four videos 412, 422, 432, 442 may, e.g., afterwards be analysed to determine a characteristic or a movement of the moving object in each of the further videos 412, 422, 432, 442.

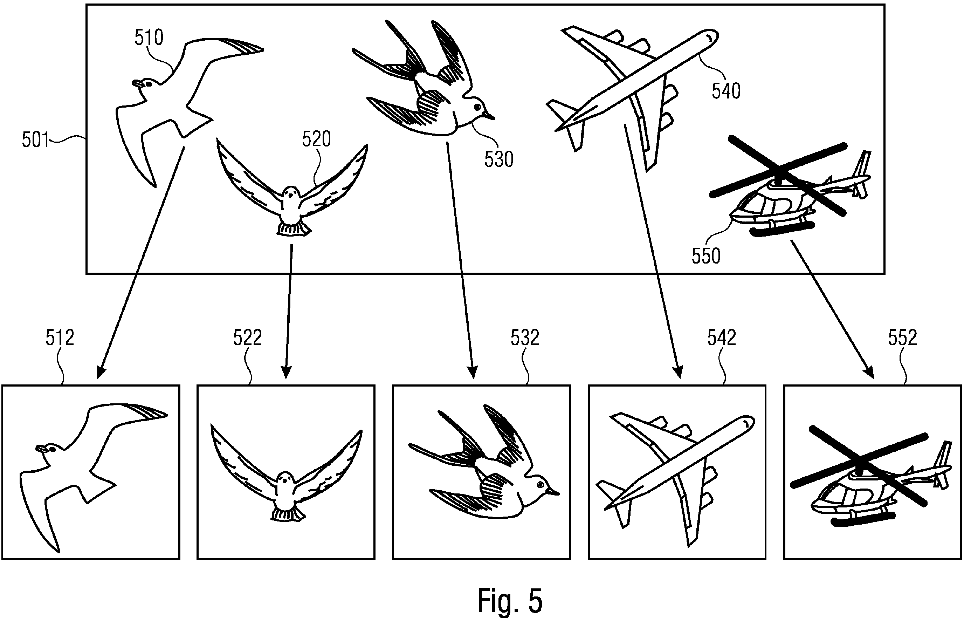

In another particular application of embodiments of the present invention, depicted by Fig. 5, a camera is directed towards the sky to record a video 501 depicting flying objects in the sky. In the video, birds 510, 520, 530, a plane 540 and a helicopter 550 can be seen. Five further video data sets each comprising further video data of a further video 512, 522, 532, 542, 552 are automatically generated from a first video data set comprising video data of a first video 501, to better monitor each of the three birds 510, 520, 530, the plane 540 and the helicopter 550 in the first video 501. Each of the (further) five videos 512, 522, 532, 542, 552 may, e.g., afterwards be analysed to determine a characteristic or a movement of the flying object in each of the further videos 512, 522, 532, 542, 552.

In the following, further embodiments of the present invention are described.

In embodiments, moving objects may, e.g., be superimposed by markers or colorations using video image progress information. This may, for example, be helpful to allow a user to better follow an moving object when the video is replayed.

Based on the movements of the moving objects, artificial excerpts of the first video are generated to obtain a further video for each of the moving objects in the first video that shall be monitored. Thus, relocations of the positions of the moving objects are normalized so that the characteristics of the moving object that is monitored, e.g., a behavioural movement of the moving object can be monitored and/or analysed in isolation.

According to an embodiment, such detailed (further) videos may, e.g., be visually improved for a better presentation to a user.

Some embodiments realize that an automatic classification can be better understood and can be checked by a user.

In an embodiment, the algorithm may, e.g., conducted in parallel or may, e.g., be conducted concurrently with respect to two or more different moving objects that shall be monitored.

A behaviour of objects may, e.g., be detected and may, e.g., be classified , for example to one of two or more different behavioural patterns.

According to an embodiment, the classification may, e.g., be conducted automatically, and may, for example, be presented to human observers to form groups, for example, depending on characteristic excerpts of videos.

If human beings would conduct monitoring, such an approach would be very time consuming, subjective and erroneous. The observers would have to watch the videos, e.g., the dog videos, for several hours, would have to clearly identify the dogs and would have to correctly count the itching. Using the algorithm according to embodiments allows to objectively determine the itching behaviour. According to embodiments, analysing the different moving objects may, e.g., be conducted in parallel or concurrently. In contrast, the monitoring capabilities of human observers are more limited. In an embodiment, a user interface allows to compare the manual analysis with the automatic analysis. In an example, it may, e.g., be possible to detect new diseases.

The provided method, system, apparatus and computer program may, e.g., be employed for any kind of moving objects, such as living moving objects, e.g., animals, and non-living objects. E.g., the input data, here, the video frames / the video data stream may, e.g., exchanged.

Some embodiments allow a continuous tracking and classifying of movement characteristics of different moving objects, e.g., different animals at a same location depending on videos and/or images.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A method, being executed by a computer or signal processor or system or apparatus, for processing a first video data set comprising first video data of a first video depicting a plurality of moving objects, wherein the method comprises:
generating (110) one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set, and
analysing (120) each further video data set of the one or more further video data sets to obtain information on the moving object being associated with said further video data set, and outputting (130) the information on said moving object.

2. A method according to claim 1,
wherein at least two further video data sets are generated (110) as the one or more further video data sets,
wherein each moving object of at least two moving objects of the plurality of moving objects is associated with exactly one of the at least two video data sets,
wherein the method comprises analysing (120) each further video data set of the at least two further video data sets to obtain information on the moving object being associated with said further video data set, and
wherein the method comprises outputting (130) the information on each moving object of the at least two moving objects.

3. A method according to claim 2,
wherein a number of further video data sets are generated (110) as the at least two further video data sets that corresponds to a number of the plurality of moving objects being depicted in the first video.

4. A method according to one of the preceding claims,
wherein generating (110) each further video data set of the one or more further video data sets is conducted such that the further video of said further video data set only depicts that moving object out of the plurality of moving objects that is associated with said further video data set.

5. A method according to one of the preceding claims,
wherein the first video data set comprises a plurality of first image data sets, wherein each of the plurality of first image data sets comprises image data for one video image of the first video,
wherein generating (110) each further video data set of the one or more further video data sets is conducted such that said further video data set comprises a plurality of further image data sets, wherein each of the plurality of further image data sets comprises image data for one video image of the further video of said further video data set, and
wherein analysing (120) each further video data set of the one or more further video data sets is conducted by analysing the moving object being associated with said further video data set in each of one or more of the plurality of further image data sets of said further video data set.

6. A method according to one of the preceding claims,
wherein generating (110) each further video data set of the one or more further video data sets is conducted using the first video data set
by tracking the moving object being associated with said further video data set in the first video, for example by tracking said moving object frame by frame for each of two or more frames of the first video data set which comprise image data for two or more video images of the plurality of video images of the first video, and
by generating said further video data set using the first video data set depending on the tracking of said moving object in the first video,
for example wherein the tracking of said moving object in the first video is conducted using a tracking algorithm, for example a centroid-based object tracking algorithm.

7. A method according to one of the preceding claims,
wherein analysing (120) each further video data set of the one or more further video data sets comprises determining whether or not a depiction of the moving object associated with said further video data set in one or more of the plurality of video images of the plurality of further frames of said further video data set corresponds to an image pattern; or
wherein analysing (120) each further video data set of the one or more further video data sets comprises determining a probability on whether the depiction of the moving object associated with said further video data set in one or more of the plurality of video images of said further video data set corresponds to the image pattern.

8. A method according to one of the preceding claims,
wherein analysing (120) each further video data set of the one or more further video data sets comprises determining whether or not the moving object being associated with said further video data set exhibits a particular characteristic or a particular movement, or
wherein analysing (120) each further video data set of the one or more further video data sets comprises determining a probability on whether the moving object being associated with said further video data set exhibits the particular characteristic or the particular movement.

9. A method according to claim 8,
wherein analysing (120) each further video data set of the one or more further video data sets comprises determining whether or not a depiction of the moving object associated with said further video data set in two or more video images of the plurality of video images of said further video data set corresponds to said image pattern;
wherein, if a number of the two or more video images in which the depiction of said moving object corresponds to the image pattern is greater than a threshold value, it is determined that said moving object exhibits the particular characteristic, and
wherein, if the number of the two or more video images in which the depiction of said moving object corresponds to the image pattern is smaller than or equal to the threshold value, it is determined that said moving object does not exhibit the particular characteristic.

10. A method according to claim 9,
wherein analysing (120) each further video data set of the one or more further video data sets comprises determining, whether or not the moving object being associated with said further video data stream exhibits the same characteristic or the same movement in each of at least two of the further video data sets.

11. A method according to one of claims 8 to 10,
wherein the particular characteristic is one of two or more particular characteristics, or wherein the particular movement is one of two or more particular movements,
wherein analysing (120) each further video data set of the one or more further video data sets comprises determining, for each further video data set of the one or more further video data sets, and for each of the two or more particular characteristics or for each of the two or more particular movements, whether or not the moving object being associated with said further video data set exhibits said particular characteristic or said particular movement; or
wherein analysing (120) each further video data set of the one or more further video data sets comprises determining a probability for each further video data set of the one or more further video data sets, and for each of the two or more particular characteristics or for each of the two or more particular movements, on whether a moving object being associated with said further video data set exhibits said particular characteristic or said particular movement.

12. A method according to one of claims 8 to 11,
wherein analysing (120) each further video data set of the one or more further video data sets comprises determining a point-in-time in the further video of said further video data set and/or in the first video when the moving object being associated with said further video data set exhibits a particular characteristic or a particular movement, or
wherein analysing (120) each further video data set of the one or more further video data sets comprises determining a point-in-time in the further video of said further video data set and/or in the first video when the probability on whether the moving object being associated with said further video data set exhibits the particular characteristic or the particular movement is greater than a threshold probability.

13. A method according to one of the preceding claims,
wherein the method comprises receiving from a user via a user interface the information on the moving object for a further video data set of the one or more further video data sets,
wherein the method comprises machine-training an artificial intelligence algorithm, for example a neural network, using said further video data set and the information on the moving object as training data.

14. A computer program for implementing the method according to one of claims 1 to 13 when being executed on the computer or on the signal processor.

15. A system (200) for processing a first video data set comprising first video data of a first video depicting a plurality of moving objects,
wherein the system (200) is configured for generating one or more further video data sets from the first video data set, such that each further video data set of the one or more further video data sets comprises further video data of a further video, such that exactly one moving object of the plurality of moving objects is associated with said further video data set, such that each one of a plurality of video images of said further video depicts only a subarea of one of a plurality of video images of the first video, and such that said one or more video images of said further video depict the moving object, which is associated with said further video data set, and
wherein the system (200) is configured for analysing each further video data set of the one or more further video data sets to obtain information on the moving object being associated with said further video data set, and wherein the system (200) is configured for outputting the information on said moving object,
for example, wherein the system (200) is configured to implement the method of one of claims 1 to 13.
